# EUROPEAN PATENT APPLICATION

(11) **EP 2 143 940 A1**
(43) Date of publication of application: **13.01.2010**
(21) Application number: 07715313.8
(22) Date of filing: 06.03.2007
(51) Int. Cl.: F03D 7/06, F03D 3/06

(54) **VERTICAL SHAFT WINDMILL**

(30) Priority: 20.02.2007 JP 2007039861
(71) Applicant: Noguchi, Tsuneo, Yamanakakomura Minamitsuru-Gun Yamanashi 4010502 (JP)
(72) Inventor: Noguchi, Tsuneo, Yamanakakomura Minamitsuru-Gun Yamanashi 4010502 (JP)
(74) Representative: HOFFMANN EITLE
(86) International application number: PCT/JP2007/054755
(87) International publication number: WO 2008/102461

(57) **Abstract**

A vertical axis windmill is provided with a plurality of blades arranged at equidistant angular intervals with the vertical axis of rotation as the center in a plane perpendicular to a vertical axis of rotation, wherein the blade has a streamlined airfoil having a lift coefficient of 1.0 or more, comprising: an opening/closing member of which the front-end part is pivotally supported by the back side of the blade; and of which the rear-end part opens/closes with respect to the blade, and opening/closing control means for controlling the opening/closing action of the opening/closing member in response to the ratio of the rotational speed of the blade to a wind speed.

## Description

### TECHNICAL FIELD

The present invention relates to a vertical axis windmill for use in wind power generation or the like, and in particular, to a vertical axis windmill in which the blades are improved so that their aerodynamic characteristics can be changed in accordance with the rotating motion thereof.

### BACKGROUND ART

It is generally known that windmills used for wind power generation include both a horizontal axis-type windmill (the propeller windmill) where the axis of rotation is horizontal to the wind direction and a vertical axis-type windmill where the axis of rotation is vertical to the wind direction. The horizontal axis windmill is characterized in that it can easily gain sufficient rotating force (motive power) to start the rotating motion from a rotationally stationary state, while the vertical axis windmill is characterized in that it can rotate regardless of the wind direction.

From among the various types of windmills presently available, it is well known that vertical axis windmills include the drag-type windmill, which uses the drag acting on a part (blade) for generating the aerodynamic force of the windmill as the main rotating force of the windmill (such as the Savoniustype and paddle-type) and the lift-type windmill, which uses the rotating direction component of the lift acting on a blade as the main rotating force of the windmill (such as the Darrieus-type and gyromill-type).

The drag-type windmill receives wind in both the rotationally stationary state and the rotating state in order to cause drag on a blade, this then starts (starts up) the rotating motion by creating a rotating force caused by the drag, and this rotating force then enables the rotating motion to continue. Such an effect is generally referred to as the 'Savonius effect'.

Meanwhile, the lift-type windmill receives wind in a rotating state and causes the rotating direction component of the lift to act on a blade and continues the rotation by application of torque applied by the rotating direction component of the lift. Such an effect is generally referred to as the 'gyromill effect'.

The drag-type vertical axis windmill, however, has a problem in that, when the tip speed ratio (the ratio of the rotational speed of the blade to the wind speed) becomes 1, the moment (torque) for rotating the windmill faster is not generated, and even an increase in wind speed will not produce an increase in rotational speed, providing poor power generation efficiency.

Furthermore, the lift-type vertical axis windmill has a problem in that, although a tip speed ratio of 1 or more provides good aerodynamic characteristics for the windmill and can increase the rotational speed owing to the above-described gyromill effect, a tip speed ratio of 1 or less provides poor aerodynamic characteristics, and the moment (torque) for rotating the windmill reduces, and in particular, in the rotationally stationary state, even when the windmill receives wind, the rotating direction component of lift acting on the blade is not generated, providing no torque.

In order to solve these problems, various windmills have been developed, including a windmill in which starting in a slight wind speed range (1 to 2 m/sec) is made possible by mechanically incorporating a drag-type vertical axis windmill into a lift-type vertical axis windmill (see, for example, Japanese Patent Application Laid-Open Publication No. 2006-46306), and a windmill in which starting in the slight wind speed range is made possible and power generation efficiency in a low wind speed range (2 to 6 m/sec) is improved by obtaining the Savonius effect aerodynamically by forming notched portions or the like on each blade in order to create a shape for generating a difference between the drag caused by wind from behind and the drag caused by wind from the front (See, for example, Japanese Patent No. 3451085). The Savonius effect is proportional to the aerodynamic characteristics of the blade shape on which drag acts and its area (the plane area perpendicular to the wind direction), and the larger this area, the greater the Savonius effect, thereby allowing the motive power and rotating force to be increased.

Such vertical axis windmills, however, have a problem in that, when rotating in a mid-to-high wind speed range (6 m/sec or more), the gyromill effect cannot be exploited to its greatest degree. The gyromill effect depends on the aerodynamic characteristics of the blade surface on which drag acts, its area (the blade area), and rotational speed. In particular, by reducing the drag acting on the blade, the gyromill effect can be increased, and the rotating force can be increased. There is a possibility that, therefore, the drag generation part (the notched portion or the like) provided in order to increase drag can reduce the gyromill effect when rotating in the mid-to-high wind speed range.

It has therefore been a requirement that the vertical axis windmill further increases the Savonius effect and further reduces the wind speed at which the windmill is started up, thereby increasing the rotating force in the low wind speed range and reducing the drag on the blade to the utmost degree in order to increase the gyromill effect in the mid-to-high wind speed range. Accordingly, the available wind speed range is expanded in order to improve the power generation efficiency further.

### DISCLOSURE OF THE INVENTION

The present invention has been developed in view of the above-described problems, and it is the object of the present invention to provide a vertical axis windmill which can convert wind force into rotating force without any significant loss across a wide wind speed range by adjusting the drag acting on a blade in accordance with the rotating state of the blade.

The above-described object of the present invention is achieved by a vertical axis windmill which is provided with a plurality of blades in a plane perpendicular to the vertical axis of rotation at equidistant angular intervals with the vertical axis of rotation as the center, wherein the blade has a streamlined airfoil having a lift coefficient of 1.0 or more, and comprising: an opening/closing member of which the front-end part is pivotally supported by the back side of the blade; and of which the rear-end part opens/closes with respect to the blade, and opening/closing control means for controlling the opening/closing action of the opening/closing member in response to the ratio of the rotational speed of the blade to a wind speed.

The above-described object is effectively achieved by allowing the opening/closing control means to allow the opening/closing member to be in an open state when the ratio of the rotational speed of the blade to the wind speed is less than 0.8 and to allow the opening/closing member to be in a closed state when the ratio of the rotational speed of the blade to the wind speed exceeds 0.8 to 1.

The above-described object is also effectively achieved by allowing the position at which the front-end part of the opening/closing member is pivotally supported to be located at the rear-end part of the back side of the blade, 65 to 75 percent off the leading edge of the blade chord length of the blade, and the maximum angle at which the opening/closing member opens with respect to the blade to be 30 to 40 degrees.

The above-described object is also effectively achieved by allowing the blade to be formed of a light metal such as an aluminum alloy or titanium alloy or a composite material such as fiber-reinforced plastic.

The above-described object is also effectively achieved by allowing the airfoil of the blade to be a shape such as that used for the main wing of a light plane (a plane with a takeoff weight of 5,700 kg or less) having asymmetric wings.

The above-described object is also effectively achieved by allowing the opening/closing control means to comprise: an arm member which is erected from the front-end part of the opening/closing member toward the inside of the blade; a spring actuator which connects the tip part of the arm member and a spring supporting member which is fixedly provided on the inner wall of the blade; and a stopper member which restricts the movable range of the tip part of the arm member, wherein the opening/closing action of the opening/closing member is controlled by a centrifugal force caused by the mass of the opening/closing member transmitted through the arm member and the elastic force of the spring actuator.

The above-described object is also effectively achieved by allowing the spring constant of the spring actuator to be set so that when the ratio of the rotational speed of the blade to the wind speed exceeds 0.8 to 1.0, the centrifugal force caused by the mass of the opening/closing member surpasses the elastic force of the spring actuator.

The above-described object is also effectively achieved by allowing the opening/closing member to be provided with a weight at the rear part of the surface facing the blade for finely adjusting its opening/closing action.

The above-described object is also effectively achieved by allowing the opening/closing control means to comprise: an opening/closing judgment section for judging the opening/closing of the opening/closing member in accordance with the ratio of the rotational speed of the blade to the wind speed; and an actuator for allowing the opening/closing member to be in the open/closed state in response to an opening/closing signal output received from the opening/closing judgment section.

The above-described object is also effectively achieved by allowing the actuator to be either one of the electric, hydraulic, or pneumatic type.

As described above, the aerodynamic characteristics of the vertical axis windmill in accordance with the present invention can be changed by providing, on the back side of a blade with a streamlined airfoil having a lift coefficient of 1.0 or more, an opening/closing member which is pivotally supported in an openable/closable manner with respect to the blade and by opening/closing the opening/closing member. This can cause an 8- to 15-fold increase in the drag occurring on the blade by switching the opening/closing member from the open state to the closed state. As a result, in the low wind speed range (the ratio of the rotational speed of the blade to the wind speed does not exceed 0.8 to 1) including the rotationally stationary state, the Savonius effect can be improved by allowing the opening/closing member to be in the open state in order to increase the drag caused by the wind hitting the blade from behind. Meanwhile, in the mid-to-high wind speed range (the ratio of the rotational speed of the blade to the wind speed exceeds 0.8 to 1), the gyromill effect caused by the rotating direction component of the lift acting on the blade can be improved by allowing the opening/closing member to be in the closed state in order to reduce the drag occurring on the blade. In other words, the vertical axis windmill in accordance with the present invention has both the advantages of a drag-type vertical axis windmill and a lift-type vertical axis windmill, thereby maximizing both the Savonius effect and the gyromill effect.

For example, the vertical axis windmill in accordance with the present invention, when it is compared to the windmill disclosed in the Japanese Patent No. 3451085 under the same conditions, can improve the Savonius effect two or three fold by allowing the opening/closing member to be in the open state, thereby allowing the windmill in the rotationally stationary state to be started up by an even lower wind speed. By allowing the opening/closing member to be in the closed state, the aerodynamic characteristics (in particular, the drag coefficient) of the blade can be reduced by 10 to 20 percent, thereby allowing the gyromill effect to be remarkably improved. As a result, the start-up wind speed (the wind speed required to start up the windmill from the rotationally stationary state) of the vertical axis windmill can be lowered further than that of a conventional vertical axis windmill, the rotating force in the low wind speed range (2 to 6 m/sec) can be sharply increased, and the rotation rate in the mid-to-high wind speed range (6 m/sec or more) can be increased further. In other words, across a wide wind speed range, the efficiency of the windmill (the efficiency of converting wind force into rotating force) can be sharply improved, and efficiency in power generation can therefore be improved.

By allowing the front-end part of the opening/closing member to be pivotally supported by a position located at the rear-end part of the back side of the blade, 65 to 75 percent off the leading edge of the blade chord length (the longitudinal width of the cross section of the blade) of the blade, and allowing the opening/closing member to open with respect to the blade by up to 30 to 40 degrees, the efficiency of the windmill can be sharply improved, especially in a wind speed range of 1 to 20 m/sec.

By providing the opening/closing control means comprising: an arm member which is erected from the front-end part of the opening/closing member toward the inside of the blade; a spring actuator which connects the tip part of the arm member and a spring supporting member which is fixedly provided on the inner wall of the blade; and a stopper member which restricts the movable range of the tip part of the arm member, the opening/closing action of the opening/closing member can be automatically controlled by a centrifugal force caused by the mass of the opening/closing member transmitted through the arm member and the elastic force of the spring actuator. In particular, by setting the spring constant of the spring actuator so that when the tip speed ratio (the ratio of the rotational speed of the blade to the wind speed) exceeds 0.8 to 1.0, the centrifugal force caused by the mass of the opening/closing member surpasses the elastic force of the spring actuator, and wind force can be converted into rotating force without any loss usually associated with each particular rotating state (stationary, slow, or mid to high).

By mounting a weight on the rear part of the surface of the opening/closing member facing the blade and finely adjusting that weight, the centrifugal force acting on the spring actuator can be finely adjusted, thereby allowing the opening/closing action of the opening/closing member to be finely adjusted without changing the spring actuator arranged within the blade.

By allowing the opening/closing control means to comprise: an opening/closing judgment section for judging the opening/closing of the opening/closing member in accordance with the ratio of the rotational speed of the blade to the wind speed; and an actuator for allowing the opening/closing member to be in the open/closed state in response to an opening/closing signal output from the opening/closing judgment section and using the actuator of the electric, hydraulic, or pneumatic type, the blade opening/closing mechanism can be used even for a large-sized vertical axis windmill.

### BRIEF DESCRIPTION OF THE DRAWINGS

Fig. 1 is a top view schematically showing a vertical axis windmill in accordance with a first embodiment of the present invention.
Fig. 2 is a cutaway elevation view schematically showing the vertical axis windmill viewed from the II arrow direction shown in Fig. 1.
Fig. 3 is a perspective view schematically showing the blade of the vertical axis windmill in accordance with the first embodiment.
Fig. 4 is a cross-sectional view schematically showing the internal structure of the blade of the vertical axis windmill in accordance with the first embodiment.
Fig. 5 is a cross-sectional view schematically showing the state in which the opening/closing member of the blade shown in Fig. 4 is closed.
Fig. 6 is a figure illustrating a rotating action in a state in which the opening/closing member of the vertical axis windmill, in accordance with the first embodiment, is open.
Fig. 7 is a figure illustrating a rotating action in a state in which the opening/closing member of the vertical axis windmill, in accordance with the first embodiment, is closed.
Fig. 8 is a block diagram showing the schematic configuration of the vertical axis windmill in accordance with the second embodiment of the present invention.

### DESCRIPTION OF THE PREFERRED EMBODIMENTS

Hereinafter, the various embodiments of the present invention will be described with reference to the drawings.

### [First embodiment]

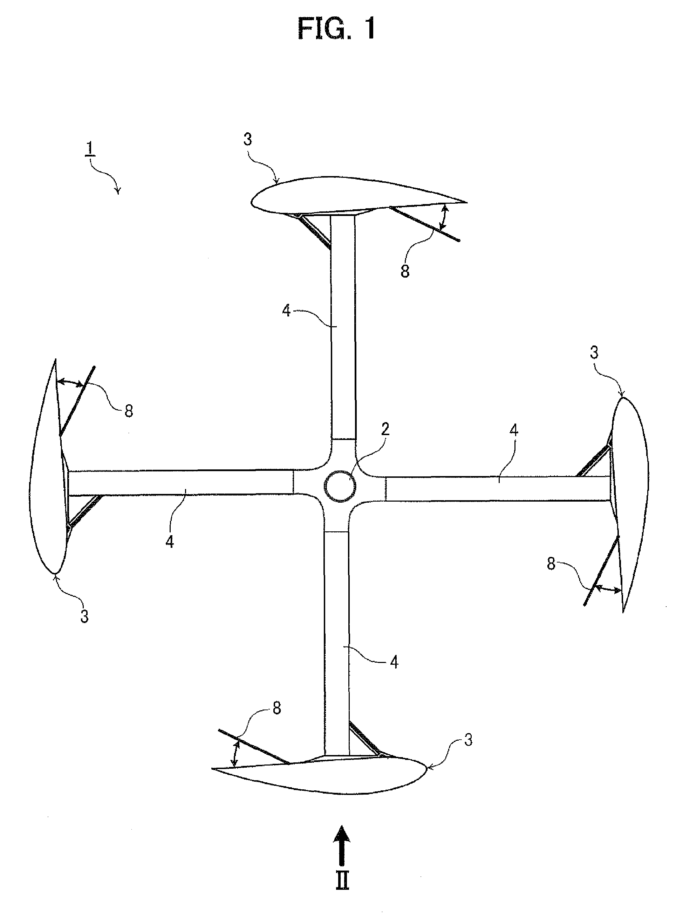

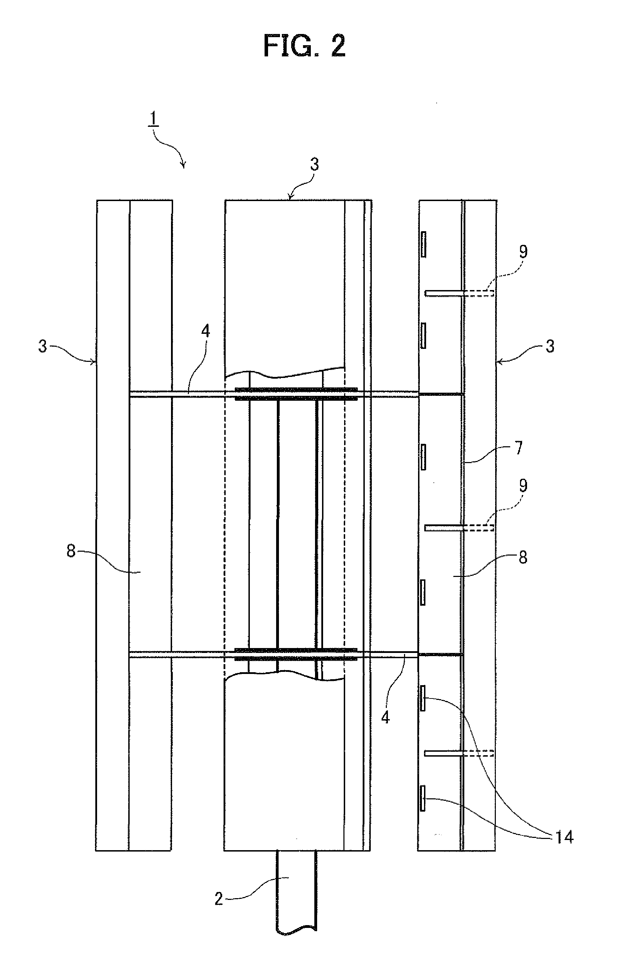

Fig. 1 is a top view schematically showing a vertical axis windmills in accordance with a first embodiment of the present invention, and Fig. 2 is a cutaway elevation view schematically showing the vertical axis windmill viewed from the II arrow direction shown in Fig. 1.

A vertical axis windmill 1 in accordance with the present embodiment is provided with an axis of rotation 2 of which the lower end is connected to a generator (not shown) or the like. Four airfoil-shaped blades 3 are arranged parallel to the axis of rotation 2 at equidistant angular intervals (90-degree intervals in the present embodiment) along the circumferential direction of the fixed radius in a plane perpendicular to the axis of rotation 2. Each blade 3 is fixed to the end part of a supporting strut 4 extending radially from the axis of rotation 2 at a predetermined mounting angle (90 degrees in the present embodiment) with respect to the supporting strut 4. The rotation of the blade 3 caused by wind is therefore transmitted to the axis of rotation 2 through the supporting strut 4.

The surface of the blade 3 is formed from a thin, plate-shaped material made of a light metal such as an aluminum alloy or titanium alloy or a composite material such as fiber-reinforced plastic (FRP). The airfoil of the blade 3 is a streamlined shape having a lift coefficient of 1.0 or more (preferably in the range of 1.0 to 1.4), and in particular, is preferably a shape such as that used for the main wing of a light plane (a plane with a takeoff weight of 5,700 kg or less) having asymmetric wings (for example, NACA-4 series blade type, an RAF blade type, a Gottingen blade type). In the present embodiment, the side of the airfoil having a larger bulge (the outer side) is regarded as the front side of the blade 3, while the side of the airfoil having a smaller bulge (the inner side), is regarded as the back side of the blade 3.

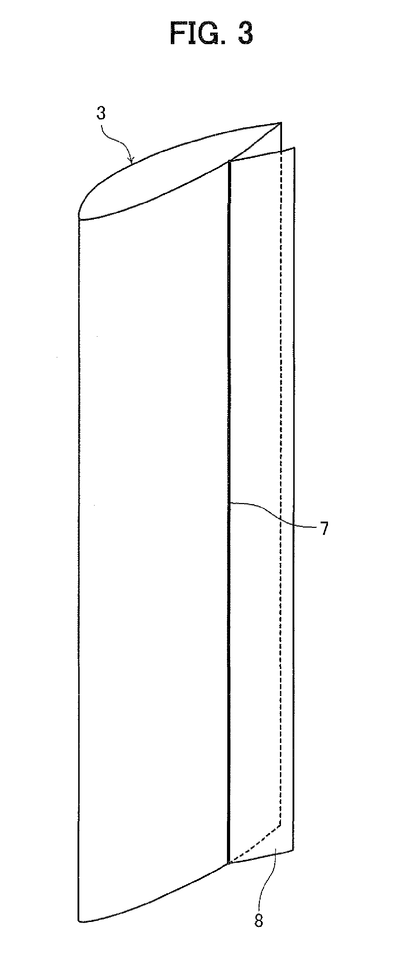

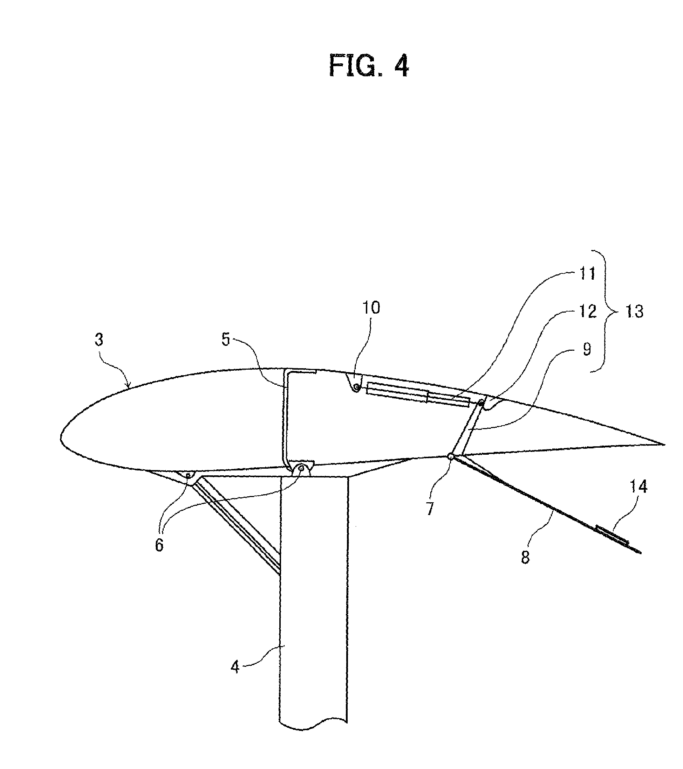

Fig. 3 is a perspective view schematically showing the appearance of the blade of the vertical axis windmill in accordance with the present embodiment. Fig. 4 is a cross-sectional view schematically showing the internal structure of the blade.

Within the blade 3, as shown in Fig. 4, a blade supporting beam 5 having a nearly U-shaped cross section is arranged which prevents the deformation or the like of the blade 3 during rotation. The blade 3 is fixed to the end part of the supporting strut 4 through strut supporting metal fittings 6, 6 provided on the base part of the blade supporting beam 5 and on the back-side, front-end part of the blade 3. On the surface of the back-side, rear-end part of the blade 3 is an opening/closing member 8, of which the front-end part is pivotally supported by the back side of the blade 3 through a hinge 7, and of which the rear-end part opens/closes with respect to the blade 3. The position at which the front-end part of the opening/closing member 8 is preferably located is at the rear-end part of the back side of the blade 3, 65 to 75 percent off the leading edge of the blade chord length thereof.

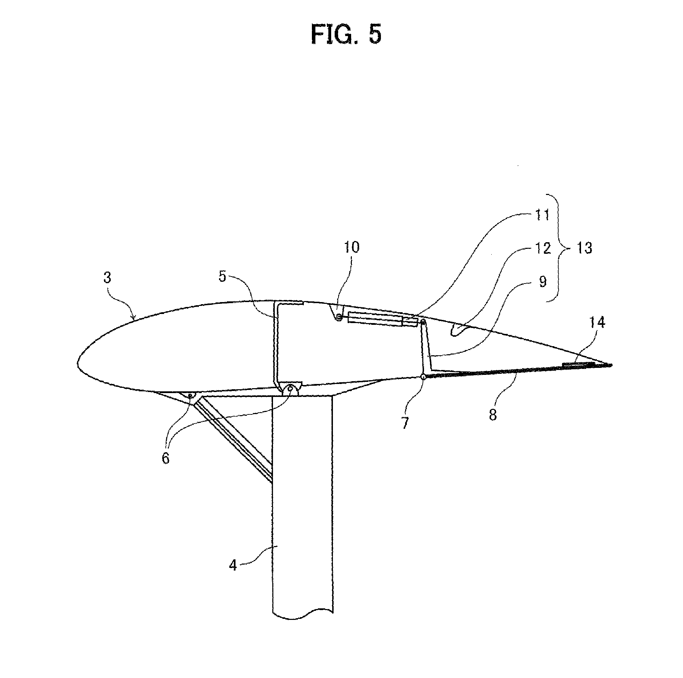

In addition, opening/closing control means 13 is provided within the blade 3, which comprises an arm member 9 which is erected from the front-end part of the opening/closing member 8 toward the inside of the blade 3, a spring actuator 11 which is arranged so that it connects the tip part of the arm member 9 and a spring supporting member 10 which is fixedly provided on the inner wall of the blade, and a stopper member 12 for restricting the movable range of the tip part of the arm member 9. The opening/closing control means 13 controls the opening/closing action of the opening/closing member 8 through centrifugal force caused by the mass of the opening/closing member 8 transmitted through the arm member 9 and the elastic force of the spring actuator 11. The spring constant of the spring actuator 11 is set so that when the tip speed ratio (the ratio of the rotational speed of the blade 3 to the wind speed) exceeds 0.8 to 1.0, the centrifugal force caused by the mass of the opening/closing member 8 surpasses the elastic force of the spring actuator 11. This allows the opening/closing member 8 in the open state to be switched to the closed state, as shown in Fig. 5, when the tip speed ratio exceeds the above-described predetermined value. In other words, at least in a rotational state in which the tip speed ratio exceeds 1.0, the blade 3 is in the closed state. The maximum angle in the open state in which the opening/closing member 8 opens with respect to the blade 3 is set by the position at which a stopper member 12 is provided, and this is preferably set to be in the range of 30 to 40 degrees.

A weight 14 is mounted at the rear part of the surface of the opening/closing member 8 facing the blade 3. The weight 14 is for finely adjusting the centrifugal force acting on the spring actuator 11. The fine adjustment of the weight 14 can perform the fine adjustment of the opening/closing action of the opening/closing member 8, in other words, it can change the setting of the tip speed ratio at which the opening/closing member 8 is switched from the open state to the closed state without changing the spring actuator 11 provided within the blade 3.

Although in the vertical axis windmill 1 in accordance with the present embodiment the surface of the back-side, rear-end part of the blade 3 itself forms the opening/closing member 8, the present invention is not limited thereto. For example, another plate-like member, of which the front-end part is pivotally mounted on the back side of the blade 3, and of which the rear-end part opens/closes with respect to the blade 3, may be used as an opening/closing member 8.

Although within the blade 3, as shown in Fig. 2, three opening/closing control means 13 (arm member 9) are provided along the longitudinal direction thereof, the present invention is not limited thereto. The number and position of the opening/closing control means 13 can be changed as required.

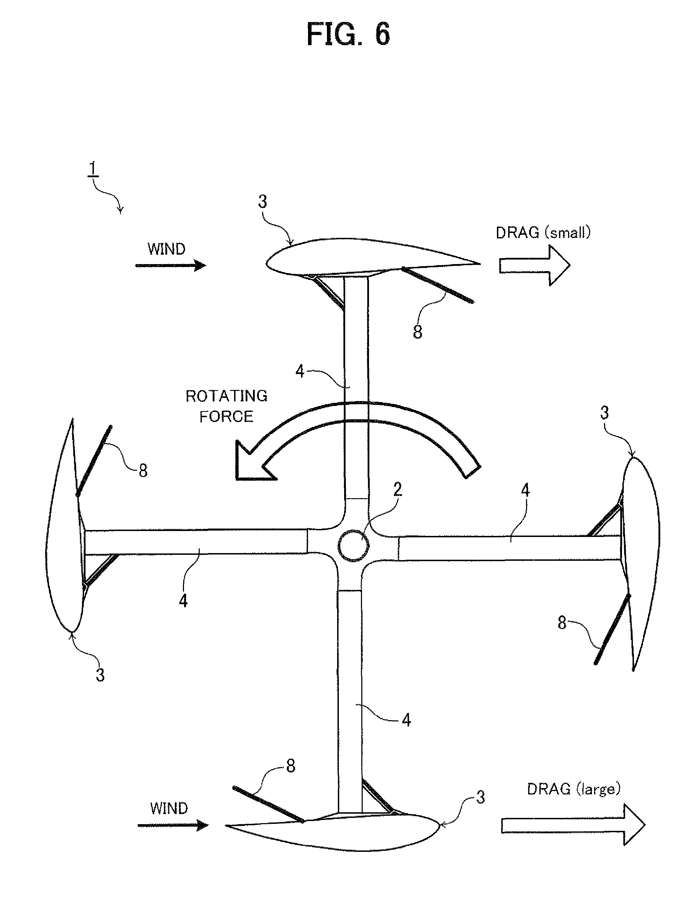

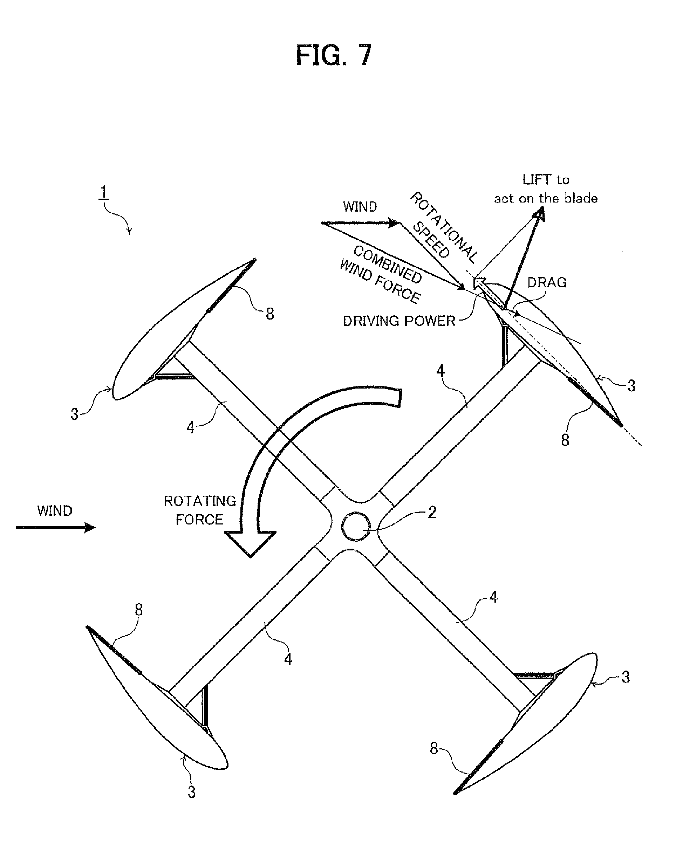

Next, the rotational action of the vertical axis windmill in accordance with the present embodiment will be described with reference to Fig. 6 and Fig. 7.

Fig. 6 is a figure illustrating a rotating action in a state in which the opening/closing member of the vertical axis windmill, in accordance with the present embodiment, is open, and Fig. 7 is a figure illustrating a rotating action in a state in which the opening/closing member of the vertical axis windmill, in accordance with the present embodiment, is closed

The opening/closing member 8 of each blade 3 of the vertical axis windmill 1 in accordance with the present embodiment is, as shown in Fig. 6, in the open state due to the elastic force of the spring actuator in the rotationally stationary state and a low-speed rotating state in which the tip speed ratio is low. When wind strikes the blade 3 when the opening/closing member 8 is in the open state, drag caused by the wind hitting the blade 3 from therebehind (the blade at the upper part of Fig. 6) is larger than the drag caused by the wind hitting the blade 3 from the front thereof (the blade at the lower part of Fig. 6). In the rotationally stationary state and the low-speed rotating state, the drag difference, expressed as torque, starts up the windmill 1, and the rotation of the windmill 1 is retained by the Savonius effect.

Meanwhile, when the blade 3 is in a mid-to-high speed rotating state in which the tip speed ratio is 0.8 to 1.0 (preferably 1.0), the opening/closing member 8 of each blade 3 is, as shown in Fig. 7, switched to the closed state owing to the centrifugal force acting on the opening/closing member 8 exceeding the elastic force of the spring actuator 8. A combined wind force consisting of the rotational speed and the wind acts on the blade 3 during rotation, allowing lift to act on the blade 3. The rotating direction component of the lift acts as driving power for the blade 3 and the rotation of the windmill 1 is retained by the gyromill effect.

In short, in the vertical axis windmill 1 in accordance with the present embodiment, for the drag-type blade 3, as shown in Fig. 6, when the tip speed ratio exceeds 1, the moment (torque) for rotating the windmill 1 at an increased speed is not generated, and even an increase in wind speed cannot produce an increase in rotational speed. When the tip speed ratio exceeds 0.8 to 1.0, therefore, the opening/closing member 8 is switched to the closed state, thereby allowing the blade 3 to be changed to the lift-type blade 3.

As described above, in the vertical axis windmill 1 in accordance with the present embodiment, the opening/closing member 8 is provided on the back side of the blade 3 having a streamlined airfoil, wherein the opening/closing member 8 is pivotally supported by the blade 3 in an openable/closable manner and the open/closed state of the opening/closing member 8 is controlled by the elastic force of the spring actuator 11 and the centrifugal force acting on the opening/closing member 8, thereby allowing the aerodynamic characteristics of the blade 3 to be automatically changed to a shape suitable for its rotating state. This can improve the Savonius effect in the low wind speed range (the rotating state in which the tip speed ratio does not exceed 0.8 to 1), including the rotationally stationary state, by increasing the drag caused by the wind hitting the blade from behind by allowing the opening/closing member 8 to be in the open state, and furthermore, can improve the gyromill effect, due to the rotating direction component of the drag acting on the blade, in the mid-to-high wind speed range (the rotating state in which the tip speed ratio exceeds 0.8 to 1) by reducing the drag acting on the blade 3 by allowing the opening/closing member 8 to be the closed state.

### [Second embodiment]

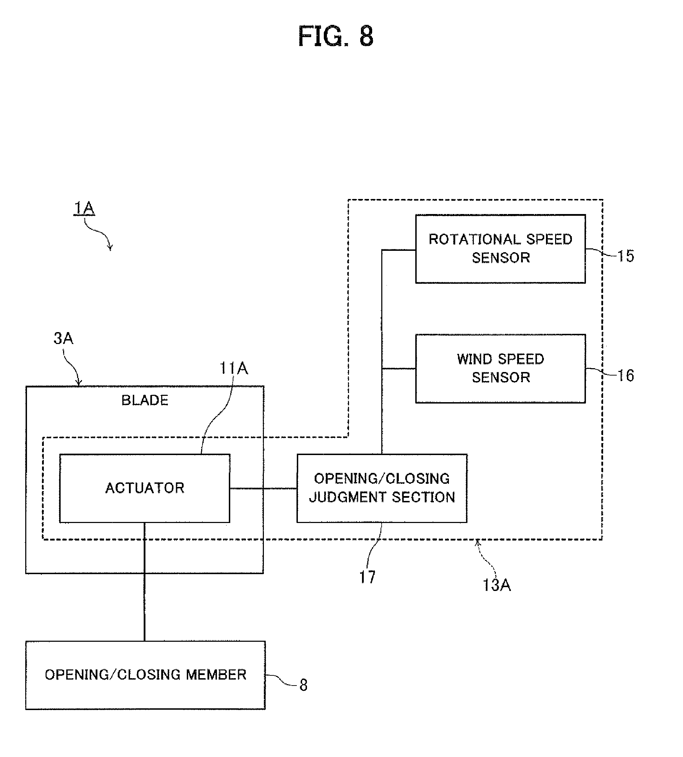

Fig. 8 is a block diagram showing the schematic configuration of the vertical axis windmill in accordance with a second embodiment of the present invention. The vertical axis windmill 1A in accordance with the present invention is the same configuration as the vertical axis windmill 1 of the above-described first embodiment, except that the configuration of the opening/closing control means 13A is different from the opening/closing control means 13 of the first embodiment. In the present embodiment, therefore, the same members as those of the above-described first embodiment will be provided with the same reference numerals, and their descriptions will be omitted accordingly.

In Fig. 8, the opening/closing control section 13A for controlling the opening/closing action of the opening/closing member 8 comprises: a rotational speed sensor 15 for detecting the rotational speed of the blade 3A; a wind speed sensor 16 for detecting the speed of the wind received by the vertical axis windmill 1; an opening/closing judgment section 17 for calculating the tip speed ratio (the ratio of the rotational speed of the blade 3A to the wind speed) on the basis of the detection values of the rotational speed sensor 15 and the wind speed sensor 16 and judging whether or not the calculated tip speed ratio exceeds a predetermined value; and an actuator 11A for allowing the opening/closing member to be in the open/closed state in response to an opening/closing signal output from the opening/closing judgment section 17.

The criterion by which the opening/closing judgment section 17 of the opening/closing control section 13A judges the open/closed state is, as is the case with the first embodiment, whether or not the tip speed ratio exceeds 0.8 to 1.0, and at least in a rotation state in which the tip speed ratio is 1.0 or more, the blade 3 is in the closed state.

The actuator 11A of the opening/closing control section 13A moves linearly in response to the opening/closing signal output from the opening/closing judgment section, thereby allowing the opening/closing member 8 to be in the open/closed state, and is driven by electricity, oil pressure, or air pressure.

Owing to the above-described configuration, the vertical axis windmill 1A in accordance with the present invention can produce an effect similar to that produced by the first embodiment. In addition, since the actuator 11A of the opening/closing control section 13A is of the electric, hydraulic, or pneumatic type, the opening/closing mechanism of the blade 3A can be used even for a large-sized vertical axis windmill.

Although embodiments of the present invention have been specifically described, the present invention is not limited thereto, and may be appropriately changed without departing from the scope of the present invention.

### INDUSTRIALAPPLICABILITY

The vertical axis windmill in accordance with the present invention can effectively convert wind force into torque across a wide wind speed range from a low wind speed range to a high wind speed range. In particular, since it can substantially improve the efficiency of a vertical axis windmill in the wind speed range of 1 to 20 m/sec, it is useful, for example, for a windmill used for wind power generation.

## Claims

1. A vertical axis windmill which is provided with a plurality of blades in a plane perpendicular to a vertical axis of rotation at equidistant angular intervals with the vertical axis of rotation as the center, wherein
the blade has a streamlined airfoil having a lift coefficient of 1.0 or more, and comprising:
an opening/closing member of which the front-end part is pivotally supported by the back side of the blade, and of which the rear-end part opens/closes with respect to the blade; and
opening/closing control means for controlling the opening/closing action of the opening/closing member in response to the ratio of the rotational speed of the blade to a wind speed.

2. The vertical axis windmill according to Claim 1, wherein the opening/closing control means allows the opening/closing member to be in an open state when the ratio of the rotational speed of the blade to the wind speed is less than 0.8 and allows the opening/closing member to be in a closed state when the ratio of the rotational speed of the blade to the wind speed exceeds 0.8 to 1.0.

3. The vertical axis windmill according to Claim 1 or Claim 2, wherein
the position at which the front-end part of the opening/closing member is pivotally supported at the rear-end part of the back side of the blade, 65 to 75 percent off the leading edge of the blade chord length of the blade, and
the maximum angle the opening/closing member opens with respect to the blade is 30 to 40 degrees.

4. The vertical axis windmill according to any one of Claims 1 to 3, wherein the blade is formed from a light metal such as an aluminum alloy or titanium alloy or a composite material such as fiber-reinforced plastic.

5. The vertical axis windmill according to any one of Claims 1 to 4, wherein the airfoil of the blade is a shape such as that used for the main wing of a light plane (a plane with a takeoff weight of 5,700 kg or less) having asymmetric wings.

6. The vertical axis windmill according to any one of Claims 1 to 5, wherein the opening/closing control means comprises:
an arm member which is erected from the front-end part of the opening/closing member toward the inside of the blade;
a spring actuator which connects the tip part of the arm member and a spring supporting member which is fixedly provided on the inner wall of the blade; and
a stopper member which restricts the movable range of the tip part of the arm member, wherein
the opening/closing action of the opening/closing member is controlled by a centrifugal force caused by the mass of the opening/closing member transmitted through the arm member and the elastic force of the spring actuator.

7. The vertical axis windmill according to Claim 6, wherein the spring constant of the spring actuator is set so that when the ratio of the rotational speed of the blade to the wind speed exceeds 0.8 to 1.0, the centrifugal force caused by the mass of the opening/closing member surpasses the elastic force of the spring actuator.

8. The vertical axis windmill according to Claim 6 or Claim 7, wherein the opening/closing member is provided with a weight at the rear part of the surface facing the blade for finely adjusting its opening/closing action.

9. The vertical axis windmill according to any one of Claims 1 to 5, wherein the opening/closing control means comprises:
an opening/closing judgment section for judging the opening/closing of the opening/closing member in accordance with the ratio of the rotational speed of the blade to the wind speed; and
an actuator for allowing the opening/closing member to be in the open/closed state in response to an opening/closing signal output from the opening/closing judgment section.

10. The vertical axis windmill according to Claim 9, wherein the actuator is either one of the electric, hydraulic, and pneumatic type.
